# FASCICULE DE BREVET EUROPEEN

(11) **EP 1 885 580 B1**
(45) Date de publication et mention de la délivrance du brevet: **18.11.2009**
(21) Numéro de dépôt: 06764703.2
(22) Date de dépôt: 29.05.2006
(51) Int. Cl.: B60R 1/07, B60N 2/02

(54) **DISPOSITIF DE COMMANDE DE PLUSIEURS ENSEMBLES D'ACTIONNEURS D'UN VEHICULE AUTOMOBILE**
STEUERVORRICHTUNG FÜR MEHRERE STELLGLIEDSYSTEME EINES KRAFTFAHRZEUGS
CONTROL DEVICE FOR SEVERAL ACTUATOR SYSTEMS OF A MOTOR VEHICLE

(30) Priorité: 30.05.2005 FR 0505423
(43) Date de publication de la demande: 13.02.2008
(73) Titulaire: DAV, 94000 Creteil (FR)
(72) Inventeur: LAURENT, Patrice, 183 allée de la Thyollire Bât. A, F-74250 Viuz en Sallaz (FR); CHARTRAIN, Cédric, F-74130 Bonneville (FR); BARATHON, Philippe, F-74250 Marcellaz (FR)
(74) Mandataire: Croonenbroek, Thomas Jakob
(86) Numéro de dépôt international: PCT/FR2006/001231
(87) Numéro de publication internationale: WO 2006/129013

(56) Documents cités:
- US-A- 5 952 630

## Description

La présente invention est relative un dispositif de commande de plusieurs ensembles d'actionneurs d'un véhicule automobile.

Depuis plusieurs années, la tendance dans l'automobile vise à remplacer toute commande manuelle d'ouvrants ou de dispositifs divers mobiles par une commande entièrement réalisée par des actionneurs, par exemple par des moteurs électriques.

On parle alors de divers ensembles d'actionneurs parmi lesquels on cite plusieurs exemples dans la liste non exhaustive ci-après,

Ainsi, le mécanisme à manivelle pour baisser ou relever les vitres des portières a été remplacé par des mécanismes à moteur électrique commandés via des interrupteurs de contrôle agencés au niveau de portières ou encore au niveau de la console du milieu du véhicule.

Pour les rétroviseurs extérieurs, le réglage mécanique via leviers a été substitué par des rétroviseurs réglables via des moteurs électriques incorporés.

Les commandes des sièges ont également suivi cette évolution et le siège est maintenant pourvu de moteurs de réglage de la position du siège.

De la même manière, on peut aussi citer le toit ouvrant.

Dans un véhicule haute gamme disposant donc d'une large motorisation de ses ouvrants et autres dispositifs réglables par des actionneurs, l'utilisateur est donc confronté au problème consistant à être entourée de nombreux boutons et interrupteurs de réglage.

En considérant qu'il est nécessaire de régler la position des actionneurs dans les deux directions opposés et qu'il y a au moins un (par exemple pour les mécanismes lève -vitres et / ou toit ouvrant), voir plusieurs actionneurs (par exemple pour les rétroviseurs extérieurs ou les mécanismes de réglage des sièges) pour un élément mobile, on comprend donc bien l'importance de réduire le nombre de commandes dans un véhicule.

On connaît du document FR 2 847 712 au nom de la Demanderesse un dispositif de commande pour des mécanismes de lève-vitre et de rétroviseurs, comportant une palette mobile, reliée à un commutateur de commande d'actionneur, et pourvue de zones d'identification tactiles de l'actionneur à déplacer.

On connaît en outre du document FR 2 844 610 au nom de la Demanderesse un dispositif d'activation par surface matricielle de commande de rétroviseurs et de lève-vitres. Ce document traite plus particulièrement du risque d'erreur de commande pouvant résulter de l'utilisation des surfaces tactiles appliquées aux commandes de rétroviseurs ou de lève-vitre.

Pour le dispositif d'activation décrit dans ce dernier document, chaque zone d'activation possède soit une fonction de sélection, soit une fonction de réglage d'un actionneur.

Le document US 5 952 630 A divulgue le préambule de la revendication 1.

La présente invention vise à permettre une amélioration d'un dispositif de commande de l'état de la technique.

A cet effet, l'invention a pour objet un dispositif de commande de plusieurs ensembles d'actionneurs d'un véhicule automobile, en particulier des actionneurs pour le réglage de la position des rétroviseurs extérieurs et des actionneurs de mécanismes de lève - vitre,
- dans lequel chaque ensemble d'actionneurs comprend au moins deux groupes d'actionneurs pouvant être sélectionnés, tels que les groupes droite et gauche des actionneurs des rétroviseurs ou les groupes des divers actionneurs de lèvre - vitre,
- chaque groupe d'actionneurs permettant le réglage en position par un ou plusieurs actionneurs d'un élément mobile tel qu'une vitre ou un rétroviseur,
   caractérisé en ce que le dispositif de commande comprend plusieurs ensembles de commandes et une unité de traitement des signaux reçus par ces ensembles de commandes, dont
   - un premier ensemble de commandes servant à la sélection d'un premier groupe d'actionneurs à commander,
   - un second ensemble de commandes servant
      o aux réglages en position des actionneurs du premier groupe en cas de réception par l'unité de traitement d'un signal de sélection du premier ensemble de commande, et
      o à la sélection d'un second groupe d'actionneurs à commander en cas de non réception par l'unité de traitement d'un signal de sélection du premier ensemble de commande, et
   - un troisième ensemble de commandes servant aux réglages en position des actionneurs du second groupe en cas de réception par l'unité de traitement d'un signal de sélection du second ensemble de commandes.

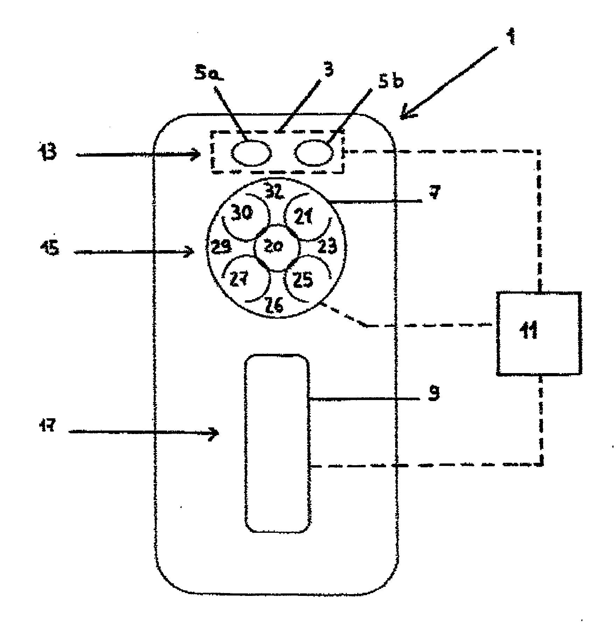

D'autres caractéristiques et avantages de l'invention ressortiront de la description suivante, donnée à titre d'exemple, sans caractère limitatif, en regard du dessin annexé représentant de façon schématique un dispositif de commande selon l'invention.

La figure unique montre de façon schématique un dispositif 1 de commande de plusieurs ensembles d'actionneurs d'un véhicule automobile.

Il comprend avantageusement une surface tactile matricielle unique 3 avec plusieurs zones 5a, 5b, 7 et 9 de forme appropriée et une unité de traitement 11 des signaux de commandes provenant de ces zones et transmettant des signaux de commande pour le réglage de position aux actionneurs.

En variante, on peut prévoir que chaque zone est réalisée sous forme d'une surface tactile individuelle, matricielle ou non.

La Demanderesse a envisagé dans encore une autre variante que les zones 5a et 5b sont réalisées sous forme de boutons, la zone 7 sous forme d'un manche de jeu (communément appelé « joystick ») et la zone 9 sous forme d'un interrupteur à bascule.

Bien entendu, l'invention n'est pas limitée à ce choix de réalisation et même des mélanges entre les diverses variantes peuvent être envisagés.

Ce dispositif permet donc la commande en position de divers ensembles d'actionneurs.

Un premier ensemble d'actionneurs est par exemple formé des actionneurs de réglage en position des rétroviseurs extérieurs droite et gauche du véhicule (deux actionneurs par rétroviseur pour l'inclinaison en avant et arrière d'une part et l'inclinaison / rotation droite - gauche d'autre part).

Un second ensemble d'actionneurs est par exemple formé par les actionneurs des mécanismes de lève - vitre (un actionneur par mécanisme) servant à relever ou baisser la vitre d'une portière.

L'invention ne se limite ni à deux ensembles d'actionneurs ni à ces deux ensembles nommés expressément ci-dessus. Ainsi, encore un autre ensemble d'actionneur peut être formé des actionneurs de réglage de la position d'un siège.

Dans un ensemble d'actionneurs, on prévoit la possibilité de réguler, en fonction de la nature de l'élément mobile (par exemple rétroviseur ou vitre), tous les actionneurs en même temps ou seulement un groupe spécifiquement sélectionné.

Ainsi, en ce qui concerne les rétroviseurs, le rétroviseur extérieur droite avec ses deux actionneurs de réglage forme un premier groupe d'actionneurs et ceux du rétroviseur gauche un second groupe d'actionneurs.

Prenant les mécanismes lève-vitre des portières, chaque actionneur d'un mécanisme forme à lui seul un groupe d'actionneurs.

Le dispositif selon l'invention se distingue par le fait qu'il peut être divisé en seulement trois ensembles de commandes 13, 15 et 17, permettant une multitude de choix de réglage.

Comme on le verra par la suite, l'ensemble de commandes 13 est seulement destiné à la sélection de groupes d'actionneurs.

L'ensemble de commandes 15 permet, en fonction d'une sélection ou non réalisé avec l'ensemble de commandes 13, soit de régler le groupe d'actionneurs sélectionné, soit de sélectionner un second groupe d'actionneurs. L'ensemble de commandes 15 possède donc une double fonction soit de réglage soit de sélection.

Enfin, l'ensemble de commandes 17 est seulement destiné au réglage en position d'un groupe d'actionneurs sélectionné via l'ensemble 15 ou encore d'un groupe d'actionneurs prédéfni, si aucune sélection n'a été détectée.

Plus en détail, un appui par l'utilisateur sur la zone 5a permet de choisir comme groupe d'actionneurs celui du rétroviseur de gauche alors que l'appui sur la zone 5b valide la sélection du rétroviseur de droite. Les appuis sont transmis et enregistrés dans l'unité de traitement pendant un temps de temporisation prédéfini, par exemple 1 à 2 secondes.

L'unité de traitement 11 est donc configurée pour accepter une sélection uniquement pendant un temps de temporisation prédéfini.

Si consécutivement, pendant ce temps de temporisation, l'utilisateur appui sur une des commandes 15 située dans la zone 7, l'unité de traitement va procéder, conformément à la longueur et/ou la pression exercée sur une partie localisée de la zone 7 au réglage en position du rétroviseur sélectionné.

Ainsi, la zone 7 a été divisée en sous-zones 20, 21, 23, 25, 26, 27, 29, 30, et 32, matérialisées par des traits. Selon l'exemple, l'appui en 32 aura pour conséquence une inclinaison en arrière alors que l'appui sur 26 une inclinaison vers l'avant du rétroviseur sélectionné.

De façon analogue, l'appui en 23 aura pour conséquence une rotation à droite alors que l'appui sur 29 une rotation à gauche du rétroviseur sélectionné.

Selon une première variante, on prévoit l'inhibition des sous - zones 20, 21, 25, 27, et 30 de sorte qu'en cas d'un rétroviseur sélectionné, un appui ne produit aucun effet sur le réglage en position de celui - ci.

Selon une autre variante, un appui sur une sous-zone intermédiaire comme par exemple la sous - zone 21 a pour conséquence une inclinaison et rotation conforme à celle définie par des sous zone voisines. De plus, en appuyant sur la sous-zone 20, on peut prévoir le rabattement complet du rétroviseur sélectionné. Cette dernière caractéristique s'avère particulièrement intéressante lors de manoeuvres délicats de stationnement. Toutefois, pour des raisons de sécurité, on prévoit d'inhiber cette fonction de rabattement des rétroviseurs lorsque le véhicule se déplace à une vitesse supérieure à une vitesse seuil prédéfinie, par exemple 10km/h, pour empêcher tout rabattement intempestif.

En revanche, si l'unité de traitement 11 n'a reçu aucun signal des zones 5a ou 5b (elle n'a donc reçu aucun signal de sélection pendant une période correspondant au temps de temporisation pédéfini), alors un appui sur une des sous - zones de l'ensemble de commandes 15 est interprété comme une commande de sélection d'un ou plusieurs groupes d'actionneurs de mécanismes de lève-vitre.

Selon une logique assez intuitive, l'appui sur la sous-zone 30 correspond à l'actionneur dans la portière avant-gauche, 21 avant.-droite, 27 arrière-gauche et 25 arrière-droite. L'appui sur les sous-zones intermédiaires permet de sélectionner les actionneurs de deux mécanismes lève-vitre en même temps, Ainsi, l'appui sur la sous-zone 32 correspond à la sélection des actionneurs dans les portières avant, 26 arrières, 23 portières droites et 29 portières gauches. De préférence, l'appui sur la sous-zone 20 correspond à la sélection de l'ensemble des groupes d'actionneurs, c'est-à-dire à la sélection de tous les actionneurs lève-vitre dans les portes.

De façon analogue par rapport à l'exposé ci-dessus, cette sélection est enregistrée pendant un temps de temporisation dans l'unité de traitement 11.

Si consécutivement, pendant ce temps de temporisation, l'utilisateur appui sur une des commandes 17 située dans la zone 9, l'unité de traitement va procéder, conformément à la position, la longueur et/ou la pression, éventuellement la direction donnée à l'appui et exercée sur une partie localisée de la zone 7 au réglage en position des vitres sélectionnées.

C'est donc grâce à la double fonction de l'ensemble de commandes, 15 que le dispositif révèle une utilisation aisée avec un nombre réduit de surfaces de commandes.

Selon un perfectionnement, en cas de non réception d'un signal de sélection du second ensemble de commande 15, le troisième ensemble de commandes 17 est apte à servir à commander des réglages en position d'un ensemble prédéfini d'actionneurs, de préférence du second groupe d'actionneurs, Selon un exemple, il peut s'agir du réglage en position de la vitre avant gauche, donc la vitre du conducteur.

## Revendications

1. Dispositif de commande de plusieurs ensembles d'actionneurs d'un véhicule automobile, en particulier des actionneurs pour le réglage de la position des rétroviseurs extérieurs et des actionneurs de mécanismes de lève - vitre,
• dans lequel chaque ensemble d'actionneurs comprend au moins deux groupes d'actionneurs pouvant être sélectionnés, tels que les groupes droite et gauche des actionneurs des rétroviseurs ou les groupes des divers actionneurs de lèvre - vitre,
• chaque groupe d'actionneurs permettant le réglage en position par un ou plusieurs actionneurs d'un élément mobile tel qu'une vitre ou un rétroviseur,
**caractérisé en ce que** le dispositif de commande comprend plusieurs ensembles de commandes (13,15,17) et une unité de traitement (11) des signaux reçus par ces ensembles de commandes, dont
- un premier ensemble de commandes (13) servant à la sélection d'un premier groupe d'actionneurs à commander,
- un second ensemble de commandes (15) servant
o aux réglages en position des actionneurs du premier groupe en cas de réception par l'unité de traitement (11) d'un signal de sélection du premier ensemble de commande, et
o à la sélection un second groupe d'actionneurs à commander en cas de non réception par l'unité de traitement (11) d'un signal de sélection du premier ensemble de commande, et
- un troisième ensemble de commandes (17) servant aux réglages en position des actionneurs du second groupe en cas de réception par l'unité de traitement (11) d'un signal de sélection du second ensemble de commandes.

2. Dispositif de commande selon la revendication 1, **caractérisé en ce qu'**en cas de non réception d'un signal de sélection du second ensemble de commandes, le troisième ensemble de commandes est apte à servir à commander des réglages en position d'un ensemble prédéfini d'actionneurs, de préférence du second groupe d'actionneurs.

3. Dispositif selon la revendication 1 ou 2, **caractérisé en ce que** le premier ensemble d'actionneurs comprend les actionneurs de réglage en position des rétroviseurs extérieurs

4. Dispositif selon l'une quelconque des revendications 1 à 3, **caractérisé en ce que** le second ensemble d'actionneurs comprend les actionneurs de réglage en position des vitres.

5. Dispositif selon l'une quelconque des revendications 1 à 4, **caractérisé en ce qu'**il comprend une surface tactile individuelle pour chaque commande.

6. Dispositif selon l'une quelconque des revendications 1 à 4, **caractérisé en ce qu'**il comprend une surface tactile matricielle unique divisée en zones pour chaque commande de sélection ou de réglage.

7. Dispositif selon l'une quelconque des revendications 1 à 6, **caractérisé en ce que** l'unité de traitement (11) est configurée pour accepter une sélection uniquement pendant un temps de temporisation prédéfini.

## Claims

1. Control device for several sets of actuators of a motor vehicle, particularly actuators for adjusting the position of the outside mirrors and window regulator mechanism actuators,
• in which each set of actuators comprises at least two groups of actuators that can be selected, such as the right and left groups of outside mirror actuators or the groups of the various window regulator actuators,
• each group of actuators making it possible to adjust the position, by one or more actuators, of a moving element such as a window or an outside mirror,
**characterized in that** the control device comprises several sets of controls (13, 15, 17) and a processing unit (11) for the signals received by these sets of controls, including
- a first set of controls (13) used to select a first group of actuators to be controlled,
- a second set of controls (15) used
o for adjusting the position of the actuators of the first group if the processing unit (11) receives a signal selecting the first set of controls, and
o to select a second group of actuators to be controlled if the processing unit (11) does not receive a signal selecting the first set of controls, and
- a third set of controls (17) used to adjust the position of the actuators of the second group if the processing unit (11) receives a signal selecting the second set of controls.

2. Control device according to Claim 1, **characterized in that**, if a signal selecting the second set of controls is not received, the third set of controls can be used to control the position adjustments of a predefined set of actuators, preferably the second group of actuators.

3. Device according to Claim 1 or 2, **characterized in that** the first set of actuators comprises the actuators for adjusting the position of the outside mirrors.

4. Device according to any one of Claims 1 to 3, **characterized in that** the second set of actuators comprises the actuators for adjusting the position of the windows.

5. Device according to any one of Claims 1 to 4, **characterized in that** it comprises an individual tactile area for each control.

6. Device according to any one of Claims 1 to 4, **characterized in that** it comprises a single matrix tactile area divided into zones for each selection or adjustment control.

7. Device according to any one of Claims 1 to 6, **characterized in that** the processing unit (11) is configured to accept a selection only for a predefined time-delay time.

## Patentansprüche

1. Steuervorrichtung für mehrere Einheiten von Stellgliedern eines Kraftfahrzeugs, insbesondere der Stellglieder zur Regelung der Position der Außenrückspiegel und der Stellglieder von Fensterhebermechanismen,
• bei der jede Einheit von Stellgliedern mindestens zwei Gruppen von Stellgliedern enthält, die ausgewählt werden können, wie die rechte und die linke Gruppe der Stellglieder der Rückspiegel oder die Gruppen der verschiedenen Fensterheber-Stellglieder,
• wobei jede Gruppe von Stellgliedern die Positionsregelung durch eines oder mehrere Stellglieder eines beweglichen Elements wie eines Fensters oder eines Rückspiegels erlaubt,
**dadurch gekennzeichnet, dass** die Steuervorrichtung mehrere Einheiten von Steuerungen (13, 15, 17) und eine Verarbeitungseinheit (11) der von diesen Einheiten von Steuerungen empfangenen Signalen enthält, zu denen gehören
- eine erste Steuereinheit (13), die für die Auswahl einer ersten Gruppe von zu steuernden Stellgliedern verwendet wird,
- eine zweite Steuereinheit (15), die verwendet wird für
o die Positionsregelungen der Stellglieder der ersten Gruppe im Fall des Empfangs eines Auswahlsignals der ersten Steuereinheit durch die Verarbeitungseinheit (11), und
o die Auswahl einer zweiten Gruppe von zu steuernden Stellgliedern im Fall des Nicht-Empfangs eines Auswahlsignals der ersten Steuereinheit durch die Verarbeitungseinheit (11), und
- eine dritte Steuereinheit (17), die für die Positionsregelungen der Stellglieder der zweiten Gruppe im Fall des Empfangs eines Auswahlsignals der zweiten Steuereinheit durch die Verarbeitungseinheit (11) verwendet wird.

2. Steuervorrichtung nach Anspruch 1, **dadurch gekennzeichnet, dass** im Fall des Nicht-Empfangs eines Auswahlsignals der zweiten Steuereinheit die dritte Steuereinheit zur Steuerung der Positionsregelungen einer vordefinierten Einheit von Stellgliedern verwendet werden kann, vorzugsweise der zweiten Gruppe von Stellgliedern.

3. Vorrichtung nach Anspruch 1 oder 2, **dadurch gekennzeichnet, dass** die erste Einheit von Stellgliedern die Stellglieder für die Positionsregelung der Außenrückspiegel enthält.

4. Vorrichtung nach einem der Ansprüche 1 bis 3, **dadurch gekennzeichnet, dass** die zweite Einheit von Stellgliedern die Stellglieder für die Positionsregelung der Fenster enthält.

5. Vorrichtung nach einem der Ansprüche 1 bis 4, **dadurch gekennzeichnet, dass** sie für jede Steuerung eine individuelle berührungsempfindliche Fläche enthält.

6. Vorrichtung nach einem der Ansprüche 1 bis 4, **dadurch gekennzeichnet, dass** sie eine einzige berührungsempfindliche Matrixfläche enthält, die in Zonen für jede Auswahl- oder Regelungssteuerung aufgeteilt ist.

7. Vorrichtung nach einem der Ansprüche 1 bis 6, **dadurch gekennzeichnet, dass** die Verarbeitungseinheit (11) konfiguriert ist, um eine Auswahl nur während einer vordefinierten Verzögerungszeit zu akzeptieren.
